# EUROPÄISCHE PATENTSCHRIFT

(11) **EP 1 125 455 B1**
(45) Veröffentlichungstag und Bekanntmachung des Hinweises auf die Patenterteilung: **22.11.2006**
(21) Anmeldenummer: 99955816.6
(22) Anmeldetag: 24.09.1999
(51) Int. Cl.: H04Q 7/36

(54) **INTERFERENZANALYSE FÜR EIN MOBILFUNKNETZ MIT ADAPTIVEN ANTENNEN**
INTERFERENCE ANALYSIS FOR A MOBILE RADIOTELEPHONE SYSTEM WITH ADAPTIVE ANTENNAS
ANALYSE DU BROUILLAGE POUR UN RESEAU RADIOTELEPHONIQUE MOBILE A ANTENNES ADAPTATIVES

(30) Priorität: 30.10.1998 DE 19851701
(43) Veröffentlichungstag der Anmeldung: 22.08.2001
(73) Patentinhaber: Vodafone Holding GmbH, 40213 Düsseldorf (DE)
(72) Erfinder: AROUDAKI, Hicham, D-44799 Bochum (DE)
(74) Vertreter: Meissner, Peter E.
(86) Internationale Anmeldenummer: PCT/DE1999/003146
(87) Internationale Veröffentlichungsnummer: WO 2000/027147

(56) Entgegenhaltungen:
- US-A- 5 768 687

## Beschreibung

Die Erfindung betrifft ein Verfahren zur Interferenzanalyse für ein adaptive Antennen in zumindest einigen Funkzellen aufweisendes Mobilfunknetz mit Verkehrskanälen und Steuerkanälen.

In Mobilfunknetzen werden Frequenzen für Verkehrskanäle und Steuerkanäle mehrfach vergeben, wobei eine Störung von Verkehrs- oder Steuerkanälen in einer Funkzelle auf Steuer- oder Verkehrskanäle in einer anderen, beispielsweise benachbarten Funkzelle nur bis zu einem vorgegebenen Schwellwert zugelassen wird und eine über den Schwellwert hinausgehende Störung bei der interferenzanalysenbasierten Frequenzzuweisung zu Steuerkanälen und Verkehrskanälen vermieden wird.

Aus der Veröffentlichung Frank Box "A Heuristic Technique ...", IEEE Transactions on Vehicular Technology, 1978, Vol. VT-27, pp. 57-74, ist eine Interferenzanalyse für die Funknetzplanung in einem Mobilfunknetz bekannt

Die Schrift US 5,768,687 A beschreibt ein Verfahren zur Modellierung der Interferenzen in einem zellularen Funktelefonnetz (RES), bestehend aus Zellen, die von jeweiligen Funkfeststationen versorgt werden. Dem Netz wird ein Frequenzspektrum zugeteilt, das eine endliche Anzahl an Frequenzen umfasst Ein Ausbreitungsmodell gibt Funksignale an, die jeweils auf jeder Frequenz des Spektrums von den Funkfeststationen des Netzes gesendet und in einem Punkt des Netzes empfangen werden.

Aufgabe der vorliegenden Erfindung ist eine Interferenzanalyse, welche möglichst einfach und effizient eine Funknetzplanung in einem Mobilfunknetz mit adaptiven Antennen in zumindest einigen Funkzellen ermöglicht. Die Aufgabe wird durch die Gegenstände der unabhängigen Ansprüche gelöst.
Das erfindungsgemäße Verfahren erlaubt eine effiziente und hochwertige, an die Besonderheiten eines Mobilfunknetzes mit adaptiven Antennen angepaßte rechnergestützte Interferenzanalyse.

Durch Verwendung einer adaptiven Antenne in einer Funkzelle können die Interferenzen von und in diese Funkzelle reduziert werden. Dabei weist die adaptive Antenne mehrere, stark gebündelte Antennendiagramme auf (im weiteren Beams genannt), die jeweils separat aktiviert werden können und nebeneinander liegende, sich überlappende Ortsteilbereiche abdecken. Pro Frequenz und TDMA-Zeitschlitz der Funkzelle ist ein einziges gebündeltes Diagramm aktiviert. Für eine Funkzelle werden zwar die Verkehrskanäle über adaptive Antennen der Basisstation der Funkzelle ausgestrahlt, die Steuerkanäle einer Zelle jedoch in der Regel von einer herkömmlichen Antenne mit einem Abdeckungsbereich über die gesamte Zelle ausgesendet, um in der Zelle einen einheitlichen Empfang der Steuersignale möglichst einfach zu ermöglichen.

Das erfindungsgemäße Verfahren bzw. die erfindungsgemäße Frequenzplanungsvorrichtung erlauben eine effiziente, rechnergestützt ausführbare, hochwertige Interferenzanalyse eines Mobilfunknetzes mit derartigen Antennen.

Weitere Merkmale und Vorteile der Erfindung ergeben sich aus den Unteransprüchen und der nachfolgenden Beschreibung eines Ausführungsbeispiels anhand der Zeichnung. Dabei zeigt
- Fig. 1: als Ablaufdiagramm den Planungsprozeß für ein herkömmliches Mobilfunknetz,
- Fig. 2: die Definition kanalabhängiger Interferenzmatrizen für ein herkömmliches, Verkehrskanäle und Steuerkanäle umfassendes Mobilfunknetz,
- Fig. 3: die Modellierung einer adaptiven Antenne durch mehrere stark bündelnde Antennen mit jeweils einem unterschiedlichen Antennendiagramm (Beam),
- Fig. 4: die unterschiedlichen, aufgrund der Modellierung in Fig. 3 erhaltenen Einträge für die Interferenz zwischen zwei Funkzellen,
- Fig. 5: die Berechnung der Interferenzwahrscheinlichkeit zwischen einer Zelle mit adaptiver Antenne und einer Zelle mit herkömmlicher Antenne,
- Fig. 6: die Berechnung der Interferenzwahrscheinlichkeit zwischen zwei Funkzellen mit jeweils einer adaptiven Antenne,
- Fig. 7: die Vorgehensweise bei der Ermittlung der kanalabhängigen Matrizen bei Berücksichtigung von adaptiven Antennen,
- Fig. 8: den modifizierten Planungsprozeß.

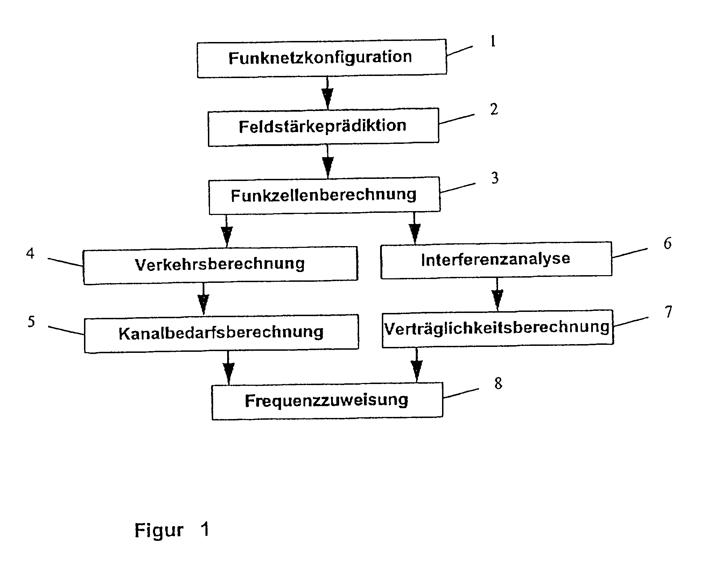

Fig. 1 zeigt als Blockschaltbild den Ablauf des Funknetzplanungsprozesses nach der analytischen Methode für ein herkömmliches Mobilfunknetz. Nach der Konfigurierung des Radionetzwerkes 1, der Feldstärkevorhersage 2 und der Zellflächenberechnung 3 wird einerseits eine Verkehrsberechnung 4 und eine Kanalanforderungsberechnung 5 pro Zelle sowie andererseits eine Interferenzanalyse 6 der Interferenzen zwischen den berechneten (3) Funkzellen und eine Verträglichkeitsanalyse 7 aufgrund berechneter Interferenzen (6) durchgeführt, worauf den Funkzellen Frequenzen zugewiesen werden 8.

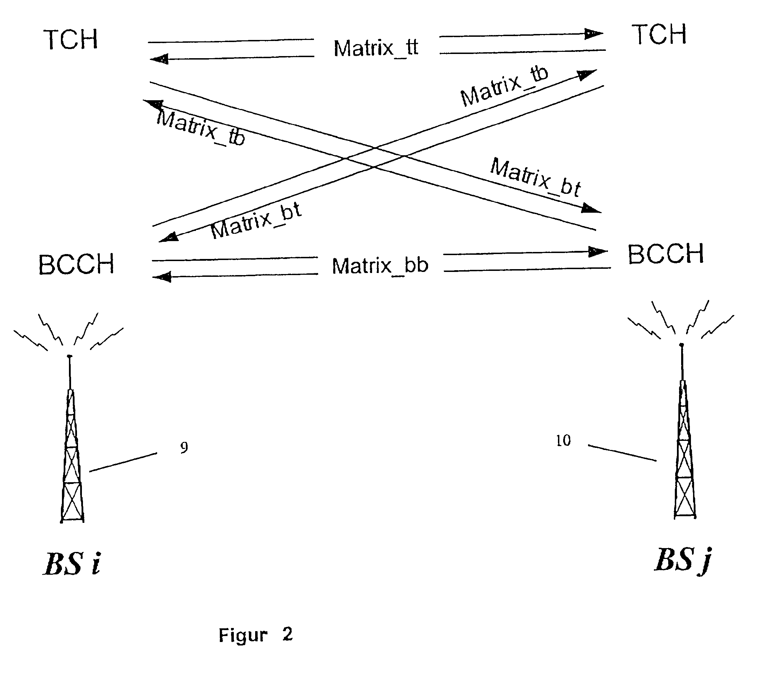

Fig. 2 zeigt die Basisstationen *BS i* 9 und *BS j* 10 für zwei Zellen des Mobilfunknetzes. Von beiden Zellen werden über Verkehrskanäle TCH Sprachinformationen gesendet und empfangen sowie über Steuerkanäle BCCH etc. Steuerinformationen ausgestrahlt. Dabei erreichen jedoch die Signale der Verkehrskanäle TCH und Steuerkanäle BCCH der Zelle mit *BS i* ungewollt auch die Zelle mit *BSj* und interferieren mit den von der *BS j* 10 auf Verkehrskanälen und Steuerkanälen ausgesendeten Signalen. Dabei stören (Matrix_tt) sich die Verkehrskanäle TCH der BS i und die Verkehrskanäle TCH der BS j. Auch interferieren (Matrix_bb) die Steuerkanäle BCCH etc. der *BS i* und der *BS j.* Ferner interferieren (Matrizen_tb und _bt) jeweils die Verkehrskanäle der einen Zelle mit den Steuerkanälen der anderen Zelle.

Zur Interferenzanalyse wird nun im gesamten Mobilfunknetz das Ausmaß der Interferenzen von in einer Zelle ausgesandten Nutzsignalen (= carrier = c) zur dortigen Intensität der aus einer anderen Zellen ausgesandten Störsignale (= Interference = I) für TCH und BCCH untersucht. Wenn die Störungen zwischen zwei Zellen zu groß sind, wird für diese beiden Zellen ein Gleichfrequenzausschluß definiert. Dabei können für die eben noch zulässigen Interferenzen zwischen zwei Zellen hinsichtlich der Verkehrskanäle TCH und der Steuerkanäle BCCH etc. unterschiedliche Schwellwerte (für Matrix_tt, _tb, _bt, _bb) definiert werden. Grund dafür ist, daß der BCCH-Träger mit voller Leistung ausgesendet wird, da auf ihm wichtige Informationen ausgestrahlt werden. Als Folge dieses Sachverhalts greifen auf einem BCCH-Träger keine interferenzverringenden Maßnahmen wie z.B. Power Control oder Frequency Hopping. Aufgrund der wichtigen Informationen, die über den BCCH ausgestrahlt werden, unterliegt ein BCCH-Träger aber auch einer höheren Anforderung an die Störfestigkeit als ein TCH-Träger.
Das Verhältnis der Störung eines Nutzsignales in einer Zelle durch aus anderen Zellen eingestreute Signale wird auch als carrier to-interference-ratio oder Interferenzverhältnis von Nutzsignal C zu Störsignal I bezeichnet.

Adaptive Antennen weisen pro TDMA-Zeitschlitz einen relativ schmalen Abdeckungsbereich auf. Herkömmliche Interferenzanalyse-Verfahren zur Analyse der Interferenz zwischen einer Zelle mit adaptiver Antenne und einer anderen Zelle mit oder ohne adaptive Antenne sind ohne weiteres nicht geeignet.

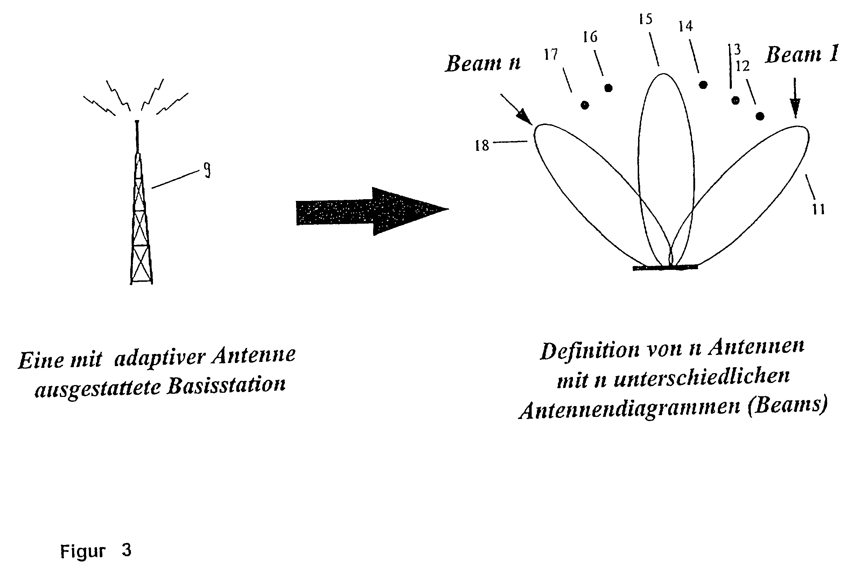

Fig. 3 zeigt die beim erfindungsgemäßen Verfahren gewählte Modellierung einer Basisstation mit adaptiver Antenne 9 durch n unterschiedliche Basisstationen mit jeweils einer stark bündelnden Antenne. Die einzelnen Diagramme dieser Antennen sind durch die Bezugszeichen 11 bis 18 gekennzeichnet. Die adaptiven Antennen ermöglichen eine Reduzierung der interzellularen Interferenzen, da zu jedem TDMA-Zeitschlitz nur ein Teilbereich der entsprechenden Sektorfläche ausgestrahlt wird. Auf der Basis dieser Modellierung können die Schritte 2 bis 6 des Planungsprozesses in Fig.1 durchgeführt werden.

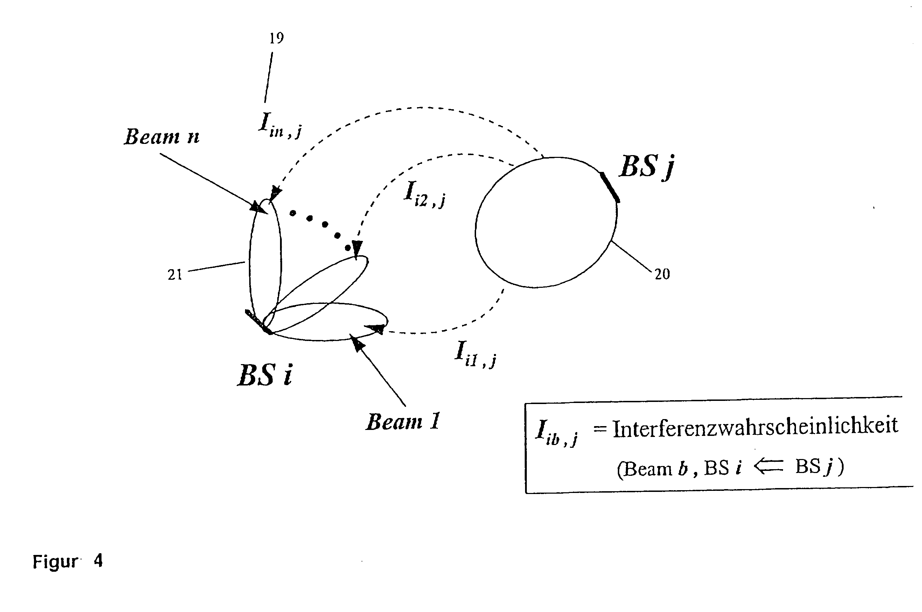

Wie Fig. 4 verdeutlicht, erhält man dadurch beispielsweise für die Interferenz zwischen der Funkzelle von *BS i* (mit adaptiver Antenne) und der Funkzelle von *BS j* (ohne adaptive Antenne) n Einträge in der Interferenzmatrix *I_tt.* Hierbei bezeichnet beispielsweise *I*_{*in,j*} 19 die Interferenzwahrscheinlichkeit der von *BS j* 20 ausgestrahlten Verkehrskanalsignale auf die Verkehrskanalsignale der dem Beam n 21 entsprechenden Zelle.
Analog erhält man für die Interferenz zwischen zwei Zellen, die beide mit adaptiven Antennen ausgestattet sind, (*n x n*) Einträge in der Interferenzmatrix.
Da jedoch für die Verträglichkeitsberechnung jeweils ein Eintrag für die von einer Zelle auf eine andere verursachte Interferenzwahrscheinlichkeit benötigt wird, müssen die einzelnen Einträge in Fig. 4 unter Berücksichtigung der zeitschlitzgemäßen Aktivierung der einzelnen Beams zu einem einzigen Eintrag zusammengefaßt werden, der die äquivalente Interferenzwahrscheinlichkeit zwischen den beiden Zellen repräsentiert.

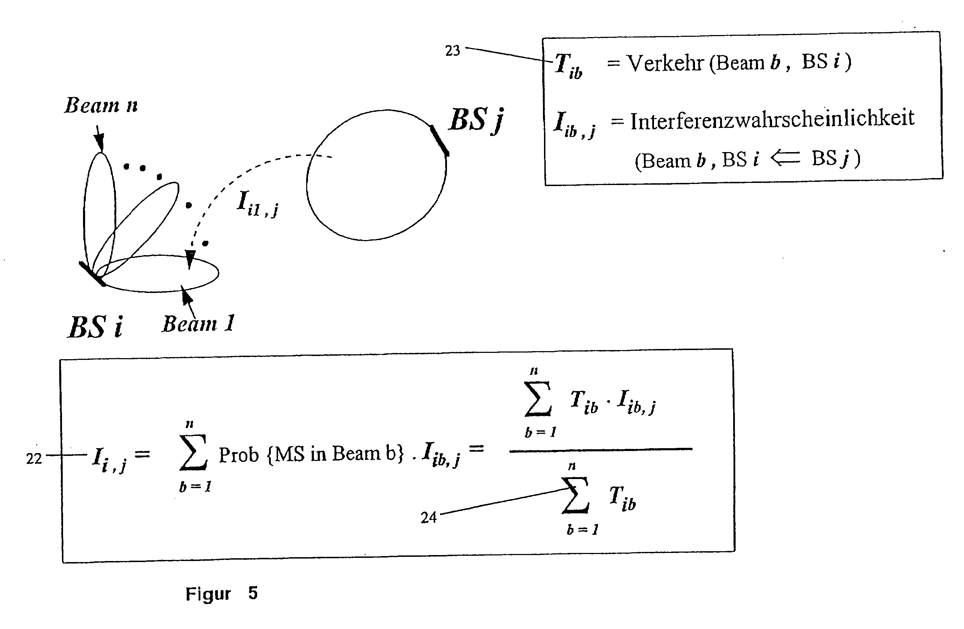

Fig. 5 zeigt die Bestimmung der äquivalenten Interferenzwahrscheinlichkeiten *I*_{*ij*} 22 für die Interferenz von Verkehrskanalsignalen aus einer herkömmlichen Antenne der Basisstation *BS j* auf die Verkehrskanalsignale einer mit einer adaptiven Antenne ausgestatteten Basisstation i. *T*_{*ib*} 23 bezeichnet hierbei das Verkehrsaufkommen in dieser Teilzelle, dessen Verhältnis zum Gesamtverkehr 24 in Zelle i die Wahrscheinlichkeit für die Aktivierung des Beams b wiedergibt. Die äquivalente Interferenzwahrscheinlichkeit gibt somit den Erwartungswert für die Interferenzwahrscheinlichkeit zwischen Zelle i und Zelle j.

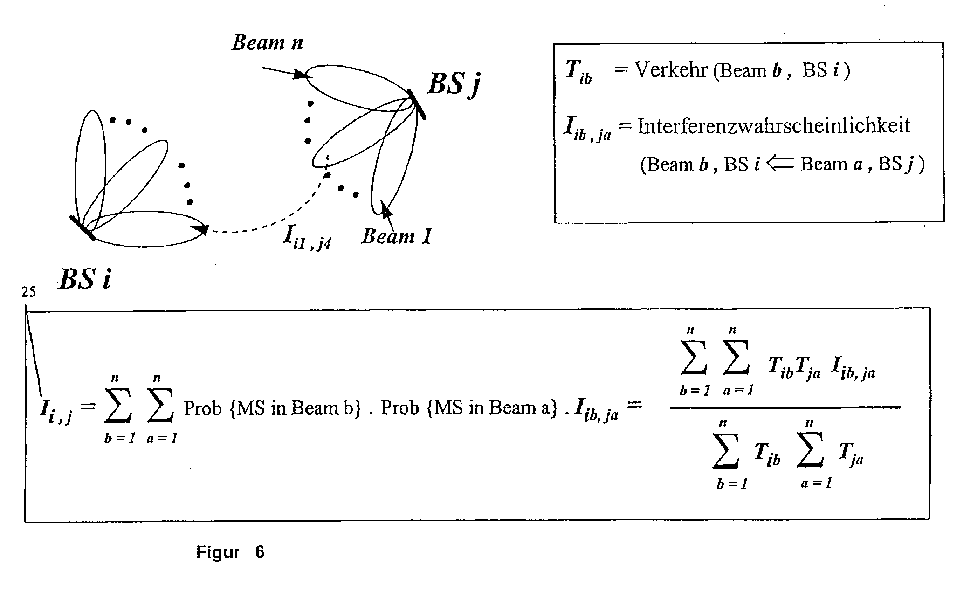

Fig. 6 zeigt die Bestimmung der äquivalenten Interferenzwahrscheinlichkeit 25 zwischen der Zelle mit *BS j* und der Zelle mit *BS i,* die beide mit adaptiven Antennen ausgestattet sind.

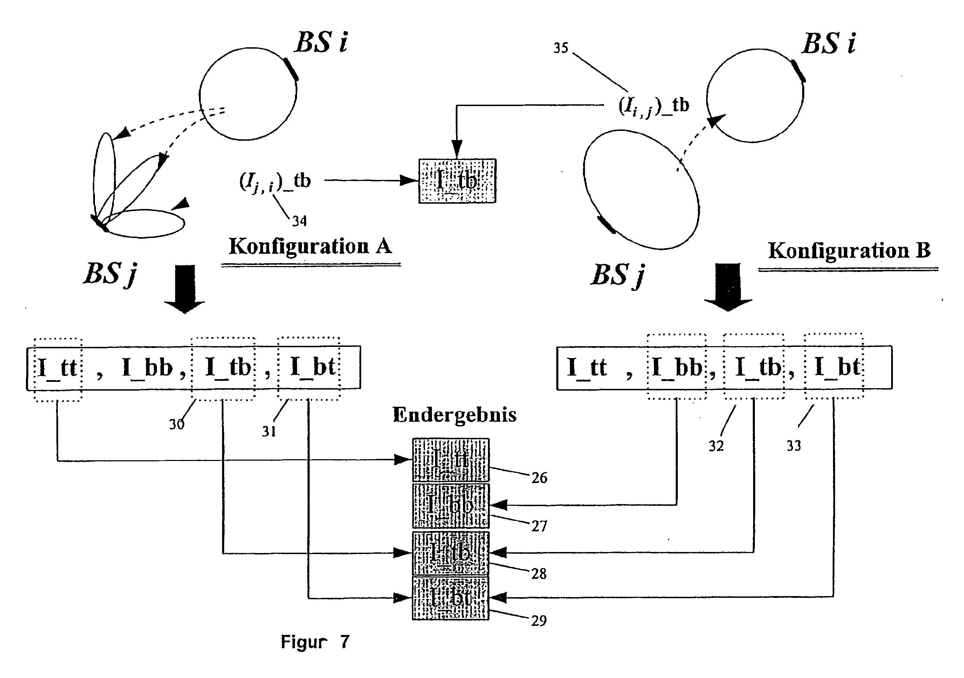

Fig. 7 zeigt die Vorgehensweise bei der Berechnung der Matrizen *I_bb, I_tb,* und *I_bt.* Da bei einer Funkzelle mit adaptiver Antenne die Steuerkanäle von einer herkömmlichen Antenne mit einem Abdeckungsbereich über die gesamte Zelle ausgestrahlt werden, muß für die Matrizen *l_bb, l_tb,* und *l_bt* eine (verglichen mit Fig. 5 und 6) andere Interferenzanalyse verwendet werden. Daher werden bei der Interferenzanalyse zwei Konfigurationen gleichzeitig betrachtet. Zum einen die Konfiguration mit den adaptiven Antennen (Konfiguration A in Fig. 7) und zum anderen die Konfiguration mit den Sektorantennen (Konfiguration B in Fig. 7). Zusätzlich zu den Berechnungen für die Konfiguration A (Schritte 2 bis 6 in Fig. 1) werden für die Konfiguration B die Berechnungsschritte 2, 3 und 6 in Fig. 1 durchgeführt. Für das Endergebnis erhält man die Matrix *I_tt* 26 von der Berechnung zur Konfiguration A gemäß der Vorgehensweise in Fig. 5 und 6. Die Matrix *I_bb* 27 erhält man aus der Berechnung zur Konfiguration B. Die Matrizen *I_tb* 28 und *I_bt* 29 erhält man aus der Kombination der gemischten Matrizen 30, 31, 32, und 33. So werden beispielsweise für die Matrix *I_tb* 28 die Einträge (*Ij,i*)*_tb* 34 aus der Matrix 30 und (*Ii,j*)*_tb* 35 aus der Matrix 32 kopiert.

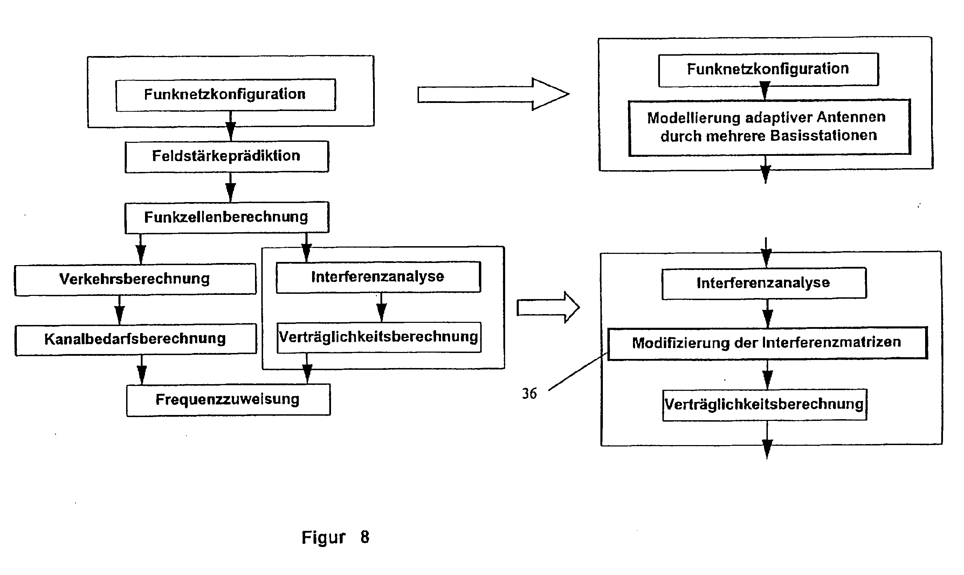

Fig. 8 zeigt als grobes Ablaufdiagramm die für ein Mobilfunknetz mit adaptiven Antennen modifizierte Vorgehensweise bei der Funknetzplanung. So werden im Schritt 36 modifizierte Interferenz-Matrizen berechnet, welche berücksichtigen, daß einerseits adaptive Antennen von (zumindest einigen) Funkzellen des Mobilfunknetzes unterschiedliche Hauptabstrahlrichtungen und damit unterschiedliche Interferenzen auf Nachbarzellen aufweisen und andererseits Steuerkanäle auch in Funkzellen mit adaptiven Antennen einheitlich für die Funkzelle angesteuert werden können.

## Patentansprüche

1. Verfahren zur Interferenzanalyse für ein in zumindest einigen seiner Zellen (*BS i*) eine adaptive Antenne aufweisendes Mobilfunknetz mit Verkehrskanälen und Steuerkanälen,
**dadurch gekennzeichnet,**
**dass** für die Mobilfunknetz-Frequenzzuweisungsplanung jeweils das Interferenz-Verhältnis (C/I bzw. *I*_{*i,j*}) der Interferenz (I) der Verkehrskanäle (11;12;... 18 und *BS i, BS j*) einer adaptiven Antenne einer ersten Zelle (*BS j*) auf Verkehrskanäle einer adaptiven Antenne einer zweiten Zelle (*BS i*) berechnet wird als Summe der mit den Verkehrswerten der einzelnen Teilzellen gewichteten Interferenzwahrscheinlichkeiten *(Prob {MS in Beam b} . Prob (MS in Beam a) . I*_{*ib,ja*}*)*
der Interferenzen jeweils eines Verkehrskanals der adaptiven Antenne der ersten Zelle zu einem Nutzsignal jeweils eines Verkehrskanals der adaptiven Antenne der zweiten Zelle unter Summierung der Werte des Verkehrs in allen Teilflächen der von den Antennendiagrammen der adaptiven Antennen der ersten und zweiten Zelle abgedeckten Funkzellen-Teilflächen,
**dass** das Interterenzverhältnis (*I*_{*i,j*}) der Interferenz eines Verkehrskanals einer ersten Zelle (*BSj*) ohne adaptive Antenne auf Verkehrskanäle einer zweiten Zelle (*BS i*) mit einer adaptiven Antenne berechnet wird als Summe der mit den Verkehrswerten der einzelnen Teilzellen gewichteten Interferenzwahrscheinlichkeiten *(Prob (MS in Beam b). I*_{*ib,j*}*)* der Interferenzen dieses Verkehrskanals der ersten Zelle (*BS j*) auf jeweils einen Verkehrskanal (19, 20, 21) der adaptiven Antenne der zweiten Zelle (*BS i*) unter Summierung der Werte des Verkehrs in allen Teilflächen der von den Antennendiagrammen der adaptiven Antenne abgedeckten Funkzellen-Teilflächen, und dass das Interferenzverhältnis der Interferenz eines Steuerkanals einer ersten Zelle (*BS i*) mit oder ohne adaptive Antenne auf einen Steuerkanal einer zweiten Zelle (*BS j*) mit oder ohne adaptive Antenne bezogen auf die Gesamtzellfläche berechnet wird aus dem Nutzsignal-Störsignalverhältnis ((*I*_{*j,i*})_*tb*) dieser Steuerkanäle in der jeweils gesamten Zellfäche ohne Berücksichtigung eventueller adaptiver Antennen einer oder beider dieser Zellen (*BS j, BS i*).

2. Verfahren nach Anspruch 1,
**dadurch gekennzeichnet,**
**dass** als Interferenz-Schwellwert oberhalb dessen ein Gleichfrequenzausschluß betrachteter Zellen definiert wird, für die Interferenz zwischen Verkehrskanälen ein anderer Wert festgelegt wird als für die Interferenz zwischen Verkehrskanälen und Steuerkanälen.

3. Verfahren nach Anspruch 1 oder 2,
**dadurch gekennzeichnet,**
**daß** ein Antennendiagramm einer Funkzelle jeweils einen örtlichen Teilbereich der Funkzellenfläche abdecken kann.

4. Verfahren nach einem der vorhergehenden Ansprüche,
**dadurch gekennzeichnet,**
**daß** als Verkehr in einer von einer adaptiven Antenne einer Zelle abgedeckten Fläche jeweils die Summe über die Werte des Verkehrs in allen Teilflächen der von den Antennendiagrammen der adaptiven Antenne abgedeckten Funkzellen-Teilflächen definiert wird.

5. Frequenzplanungsvorrichtung für die Interferenzanalyse für ein zumindest einige Zellen mit einer adaptiven Antenne aufweisendes Mobilfunknetz mit Verkehrskanälen (TCH) und Steuerkanälen (BCH, BCCH etc.),
**dadurch gekennzeichnet,**
**dass** für die Mobilfunknetz-Frequenzzuweisungsplanung das Interferenz-Verhältnis (C/I) der Interferenz (I) der Verkehrskanäle einer ersten Zelle (*BS j*) mit einer adaptiven Antenne auf Verkehrskanäle einer zweiten Zelle (*BS i*) mit einer adaptiven Antenne zu einem Nutzsignal in der zweiten Zelle (*BS i*) berechnet wird als Summe der mit den Verkehrswerten der einzelnen Teilzellen gewichteten Interferenzwahrscheinlichkeiten *(Prob {MS in Beam b}. Prob (MS in Beam a). I*_{*ib,ja*}*)*
der Interferenzen jeweils eines Verkehrskanals (25;26) der adaptiven Antenne der ersten Zelle zu einem Nutzsignal jeweils eines Verkehrskanals der adaptiven Antenne der zweiten Zelle (*BS i*),
**dass** das Interferenzverhältnis der Interferenz eines Verkehrskanals einer ersten Zelle ohne adaptive Antenne auf Verkehrskanäle einer zweiten Zelle (BSi) mit einer adaptiven Antenne berechnet wird als Summe der mit den Verkehrswerten der einzelnen Teilzellen gewichteten Interferenzwahrscheinlichkeiten *(Prob (MS in Beam b). I*_{*ib,j*}*)* der Interferenzen eines Verkehrskanals der ersten Zelle (*BS j*) auf jeweils einen Verkehrskanal der adaptiven Antenne der zweiten Zelle (*BS i*), und
**dass** das Interferenzverhältnis der Interferenz eines Steuerkanals einer ersten Zelle (*BS j*) mit oder ohne adaptive Antenne auf einen Steuerkanal einer zweiten Zelle (*BS i*) mit oder ohne adaptive Antenne bezogen auf die Gesamtzellfläche berechnet wird aus dem Nutzsignal-Störsignalverhältnis (*I*_{*j,i*}) dieser Steuerkanäle in der jeweils gesamten Zellelfäche ohne Berücksichtigung eventueller adaptiver Antennen einer dieser Zellen (*BS j, BS i*).

## Claims

1. Method of interference analysis for a mobile telephony network with traffic channels and control channels, and with an adaptive antenna in at least some of its cells (*BS i*),
**characterised**
**in that**, for the mobile telephony network frequency assignment planning, in each case the interference ratio (C/I or *I*_{*ij*}) of the interference (I) of the traffic channels (11;12;...18 and *BS i, BS j*) of an adaptive antenna of a first cell (*BS j*) with traffic channels of an adaptive antenna of a second cell (*BS i*) is calculated as the sum of the interference probabilities (*Prob {MS in Beam b} . Prob (MS in Beam a) . I*_{*ib,ja*}) - that are weighted with the traffic values of the individual part-cells - of the interferences in each case of a traffic channel of the adaptive antenna of the first cell with a wanted signal in each case of a traffic channel of the adaptive antenna of the second cell, by adding the values of the traffic in all the part-areas of the radio cell part-areas covered by the directional diagram of the adaptive antennas of the first and second cell,
**in that** the interference ratio (*Iij*) of the interference of a traffic channel of a first cell (*BS j*) without an adaptive antenna on traffic channels of a second cell (*BS i*) with an adaptive antenna is calculated as the sum of the interference probabilities *(Prob {MS in Beam b}*. *I*_{*ib,j*}*)* - that are weighted with the traffic values of the individual part-cells - of the interferences of this traffic channel of the first cell (*BS j*) on in each case one traffic channel (19, 20, 21) of the adaptive antenna of the second cell (*BS i*), by adding the values of the traffic in all part-areas of the radio cell part-areas covered by the directional diagram of the adaptive antenna, and
**in that** the interference ratio of the interference of a control channel of a first cell (*BS i*) with or without an adaptive antenna on a control channel of a second cell (*BS j*) with or without an adaptive antenna in relation to the total cell area is calculated from the ratio between the wanted signal and the interference signal (*(I*_{*j,i*}*)_tb*) of these control channels in, in each case, the total cell area, without making allowance for any adaptive antennas of one or both of these cells (*BS j, BS i*)*.*

2. Method as in claim 1,
**characterised in that**,
for the interference threshold value above which a same-frequency exclusion of the cells in question is defined, a different value is specified for interference between traffic channels from that for interference between traffic channels and control channels.

3. Method as in claim 1 or 2,
**characterised in that**
each directional diagram of a radio cell can cover a local part-area of the radio cell area.

4. Method as in one of the preceding claims,
**characterised in that**,
as traffic in an area covered by an adaptive antenna of a cell, in each case the total is defined by the values of the traffic in all the part-areas of the radio cell part-areas covered by the directional diagrams of the adaptive antenna.

5. Frequency planning device for interference analysis for a mobile telephony network with traffic channels (TCH) and control channels (BCH, BCCH etc.) and having at least some cells with an adaptive antenna,
**characterised**
**in that**, for mobile telephony network frequency assignment planning, the interference ratio (C/I) of the interference (I) between the traffic channels of a first cell (*BS j*) with an adaptive antenna on traffic channels of a second cell (*BS i*) with an adaptive antenna, and a wanted signal in the second cell (*BS i*) is calculated as the sum of the interference probabilities *(Prob {MS in Beam b} . Prob (MS in Beam a) . I*_{*ib,ja*}*)* - that are weighted with the traffic values of the individual part-cells - of the interferences in each case of a traffic channel (25; 26) of the adaptive antenna of the first cell with a wanted signal in each case of a traffic channel of the adaptive antenna of the second cell (*BS i*)*,*
**in that** the interference ratio of the interference of a traffic channel of a first cell without an adaptive antenna on traffic channels of a second cell (BS i) with an adaptive antenna is calculated as the sum of the interference probabilities (*Prob {MS in Beam b}. I*_{*ib,j*}*)* - that are weighted with the traffic values of the individual part-cells - of the interferences of a traffic channel of the first cell (*BS j*) on in each case one traffic channel of the adaptive antenna of the second cell (*BS i*), and
**in that** the interference ratio of the interference of a control channel of a first cell (*BS j*) with or without an adaptive antenna on a control channel of a second cell (*BS i*) with or without an adaptive antenna in relation to the total cell area is calculated from the ratio (*I*_{*j,i*}) between the wanted signal and the interference signal of these control channels in, in each case, the total cell area, without making allowance for any adaptive antennas of one of these cells (*BS j, BS i*).

## Revendications

1. Procédé d'analyse d'interférence pour un réseau de radiotéléphonie mobile présentant une antenne adaptative dans au moins quelques-unes de ses cellules (*BSi*) et comportant des canaux de trafic et des canaux de commande,
**caractérisé en ce que**, pour l'établissement d'un plan d'attribution des fréquences du réseau de radiotéléphonie mobile, on calcule à chaque fois le rapport d'interférence (C/l ou *I*_{*i,j*}) de l'interférence (I) des canaux de trafic (11 ; 12 ; ... 18 et *BSi, BSj*) d'une antenne adaptative d'une première cellule (*BSj*) sur les canaux de trafic d'une antenne adaptative d'une seconde cellule (*BSi*) en tant que somme des probabilités d'interférence, pondérées par les valeurs de trafic des différentes cellules partielles (*Prob {MS in Beam b} . Prob* (*MS in Beam a) . I*_{*ib,ja*}*),* des interférences d'un canal de trafic de l'antenne adaptative de la première cellule par rapport à un signal utile d'un canal de trafic de l'antenne adaptative de la seconde cellule en effectuant la somme des valeurs du trafic dans toutes les surfaces partielles des surfaces partielles de cellules radio couvertes par les diagrammes de couverture des antennes adaptatives de la première et de la seconde cellule, **en ce que** l'on calcule le rapport d'interférence (*I*_{*i*,j}) de l'interférence d'un canal de trafic d'une première cellule (*BSj*) sans antenne adaptative sur les canaux de trafic d'une seconde cellule (*BSi*) avec antenne adaptative en tant que somme des probabilités d'interférence, pondérées par les valeurs de trafic des différentes cellules partielles *(Prob (MS in Beam b) . I*_{*ib,j*}*),* des interférences de ce canal de trafic de la première cellule (*BSj*) sur un canal de trafic (19, 20, 21) de l'antenne adaptative de la seconde cellule (*BSi*) en effectuant la somme des valeurs du trafic dans toutes les surfaces partielles des surfaces partielles de cellules radio couvertes par les diagrammes de couverture de l'antenne adaptative, et **en ce que** l'on calcule le rapport d'interférence de l'interférence d'un canal de commande d'une première cellule (*BSi*) avec ou sans antenne adaptative sur un canal de commande d'une seconde cellule (*BSj*) avec ou sans antenne adaptative rapportée à la surface de cellule totale à partir du rapport signal utile-signal perturbateur (*(I*_{*j,i*}*)_tb*) de ces canaux de commande dans l'ensemble de la surface de cellule concernée sans tenir compte des éventuelles antennes adaptatives de l'une de ces deux cellules ou des deux cellules (*BSj, BSi*).

2. Procédé selon la revendication 1,
**caractérisé en ce que**, comme seuil d'interférence au-dessus duquel il est défini une exclusion de fréquence identique des cellules considérées, il est fixé pour l'interférence entre les canaux de trafic une autre valeur que celle définie pour l'interférence entre les canaux de trafic et les canaux de commande.

3. Procédé selon la revendication 1 ou 2,
**caractérisé en ce qu'**un diagramme de couverture d'antenne d'une cellule radio peut à chaque fois couvrir une zone géographique partielle de la surface de cellule radio.

4. Procédé selon l'une des revendications précédentes,
**caractérisé en ce que**, comme trafic dans une surface couverte par une antenne adaptative d'une cellule, il est à chaque fois défini la somme des valeurs du trafic dans toutes les surfaces partielles des surfaces partielles de cellules radio couvertes par les diagrammes de couverture de l'antenne adaptative.

5. Dispositif d'établissement d'un plan d'attribution des fréquences pour l'analyse d'interférence d'un réseau de radiotéléphonie mobile présentant au moins quelques cellules ayant une antenne adaptative et comportant des canaux de trafic (TCH) et des canaux de commande (BCH, BCCH, etc.),
**caractérisé en ce que**, pour l'établissement d'un plan d'attribution des fréquences du réseau de radiotéléphonie mobile, on calcule le rapport d'interférence (C/I) de l'interférence (I) des canaux de trafic d'une première cellule *(BSj)* ayant une antenne adaptative sur les canaux de trafic d'une seconde cellule *(BSi)* ayant une antenne adaptative par rapport à un signal utile dans la seconde cellule (*BSi*) en tant que somme des probabilités d'interférence, pondérées par les valeurs de trafic des différentes cellules partielles (*Prob {MS in Beam b}. Prob (MS in Beam a). I*_{*ib,ja*})*,* des interférences d'un canal de trafic (25 ; 26) de l'antenne adaptative de la première cellule par rapport à un signal utile d'un canal de trafic de l'antenne adaptative de la seconde cellule (*BSi*), **en ce que** l'on calcule le rapport d'interférence de l'interférence d'un canal de trafic d'une première cellule sans antenne adaptative sur les canaux de trafic d'une seconde cellule (*BSi*) ayant une antenne adaptative en tant que somme des probabilités d'interférence, pondérées par les valeurs de trafic des différentes cellules partielles *(Prob (MS in Beam b)* . *l*_{*ib,j*}*),* des interférences d'un canal de trafic de la première cellule (*BSj*) sur un canal de trafic de l'antenne adaptative de la seconde cellule (*BSi*) et **en ce que** l'on calcule le rapport d'interférence de l'interférence d'un canal de commande d'une première cellule (*BSj*) avec ou sans antenne adaptative sur un canal de commande d'une seconde cellule (*BSi*) avec ou sans antenne adaptative rapportée à la surface de cellule totale à partir du rapport signal utile/signal perturbateur (*I*_{*j,i*}) de ces canaux de commande dans l'ensemble de la surface de cellule concernée sans tenir compte des éventuelles antennes adaptatives de l'une de ces cellules (*BSj, BSi*)*.*
